(19) Europäisches Patentamt
European Patent Office
Office européen des brevets

(11) **EP 4 592 222 A1**

(12) **EUROPEAN PATENT APPLICATION**
published in accordance with Art. 153(4) EPC

(43) Date of publication:
**30.07.2025 Bulletin 2025/31**

(21) Application number: **23871971.0**

(22) Date of filing: **14.09.2023**

(51) International Patent Classification (IPC):
***B65G 47/31*** *(2006.01)*

(52) Cooperative Patent Classification (CPC):
**B65G 47/31**

(86) International application number:
**PCT/JP2023/033569**

(87) International publication number:
**WO 2024/070738 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022 JP 2022158631**

(71) Applicant: **Daifuku Co., Ltd.**
**Osaka-shi, Osaka 555-0012 (JP)**

(72) Inventors:
• SHIKI, Kiyoshi
Osaka-shi, Osaka 555-0012 (JP)
• NAKANISHI, Shota
Osaka-shi, Osaka 555-0012 (JP)
• TAKIMOTO, Takashi
Kitakyushu-shi, Fukuoka 802-0001 (JP)

(74) Representative: **Grosse Schumacher Knauer von
Hirschhausen**
**Patent- und Rechtsanwälte**
**Nymphenburger Strasse 14**
**80335 München (DE)**

(54) **ORIENTATION ADJUSTMENT APPARATUS**

(57)    An orientation adjustment apparatus (10) includes an orientation adjustment conveyor (20) configured to cause the respective conveyance speeds of a first conveyor part (21) and a second conveyor part (22) to be different from each other, wherein the first conveyor part (21) has a conveyance surface (21a) that is inclined in a conveyance width direction (Y) to a lower side (Z2) in a vertical direction (Z) on a second conveyance width direction side (Y2) at a first end portion (71) and that has an inclination angle ($\varphi$1) with respect to a horizontal plane in the conveyance width direction (Y) which inclination angle ($\varphi$1) gradually decreases toward a second end portion (72), and the second conveyor part (22) has a conveyance surface (22a) that is inclined in the conveyance width direction (Y) to the lower side (Z2) in the vertical direction (Z) on a first conveyance width direction side (Y1) at a first end portion (71) and that has an inclination angle ($\varphi$2) with respect to the horizontal plane in the conveyance width direction (Y) which inclination angle ($\varphi$2) gradually decreases toward a second end portion (72).

Fig.6

EP 4 592 222 A1

## Description

Technical Field

The present invention relates to an orientation adjustment apparatus that adjusts the orientation of a conveyance target.

Background Art

An example of such an orientation adjustment apparatus is disclosed in Japanese Patent Application Laid-Open No. 2010-100398 (Patent Literature 1). Patent Literature 1 discloses an orientation adjustment apparatus that adjusts the orientation of a rectangular or square conveyance target by making speeds on right and left sides of a conveyance direction of an orientation adjustment conveyor different from each other with respect to a rectangular or square conveyance target.

Citation List

Patent Literature

Patent Literature 1: Japanese Patent Application Laid-Open No. 2010-100398

Summary of Invention

Technical Problem

Although the apparatus described in Patent Literature 1 is on the assumption that adjustment of the orientation of a conveyance target of which a bottom surface has a planar shape is performed, it may be necessary to adjust the orientations of a plurality of types of conveyance targets of which bottom surfaces are different from each other in shape although depending on the purpose of use of the orientation adjustment apparatus. However, in the case of the orientation adjustment apparatus described in Patent Literature 1, no particular consideration has been given to such a point. Therefore, although depending on the shape of a bottom surface, there is a case where the orientation is changed insufficiently even when the speeds on the right and left sides of the conveyance direction are made different from each other.

Therefore, there is a demand for realization of a technique with which it is possible to appropriately perform orientation adjustment of conveyance targets having various bottom surface shapes.

Solution to Problem

In view of the description as above, there is provided an orientation adjustment apparatus that adjusts an orientation of a conveyance target, the orientation adjustment apparatus including: an orientation adjustment conveyor configured to adjust the orientation of the conveyance target while conveying the conveyance target along a prescribed conveyance direction, in which the orientation adjustment conveyor includes a first conveyor part and a second conveyor part that are disposed in parallel to be adjacent to each other in a conveyance width direction and is configured to cause the first conveyor part and the second conveyor part to have respective conveyance speeds different from each other, the conveyance width direction being a direction orthogonal to the conveyance direction, the first conveyor section is disposed on a first conveyance width direction side relative to the second conveyor section in the conveyance width direction, the first conveyance width direction side being opposite to a second conveyance width direction side, the first conveyor section and the second conveyor section each have a first end portion as a first one of an upstream end portion and a downstream end portion and a second end portion as a second one of the upstream end portion and the downstream end portion, the first conveyor part has a conveyance surface that is inclined in the conveyance width direction to a lower side in a vertical direction on the second conveyance width direction side at a first end portion and that has an inclination angle with respect to a horizontal plane in the conveyance width direction which inclination angle gradually decreases toward the second end portion, and the second conveyor part has a conveyance surface that is inclined in the conveyance width direction to the lower side in the vertical direction on the first conveyance width direction side at a first end portion and that has an inclination angle with respect to the horizontal plane in the conveyance width direction which inclination angle gradually decreases toward the second end portion.

According to the present configuration, in a case where a bottom surface of the conveyance target is bent to protrude to the lower side in the vertical direction, a large area of contact between the bottom surface of the conveyance target and a conveyance surface of the orientation adjustment conveyor is able to be more easily ensured when the conveyance surface of the orientation adjustment conveyor is inclined to be on the lower side in the vertical direction in the vicinity of a boundary between the first conveyor part and the second conveyor part. Meanwhile, in a case where the bottom surface of the conveyance target is planar or almost planar, a large area of contact between the bottom surface of the conveyance target and the conveyance surface of the orientation adjustment conveyor is able to be more easily ensured when the conveyance surface of the orientation adjustment conveyor is also planar. According to the present configuration, it is possible to appropriately perform orientation adjustment of a conveyance target of which a bottom surface is bent to protrude toward the lower side at a section on a first end portion side and it is possible to appropriately perform orientation adjustment of a conveyance target of which a bottom surface is planar or almost planar at a section on a second end portion side. Therefore, it is possible to appropriately perform orientation adjustment of conveyance targets having various bottom surface shapes.

Further features and advantages of the orientation adjustment apparatus will become apparent from the following description of embodiments, which will be described with reference to the drawings.

Brief Description of Drawings

Fig. 1 is a block diagram illustrating a control configuration of an orientation adjustment apparatus of a first embodiment;
Fig. 2 is a top view of the orientation adjustment apparatus of Fig. 1;
Fig. 3 is a side view of a first conveyor part of Fig. 1 as seen from a first conveyance width direction side Y1;
Fig. 4 is a side view of a second conveyor part of Fig. 1 as seen from a second conveyance width direction side Y2;
Fig. 5 is a front view of first rollers and second rollers of Fig. 1 as seen from an upstream side X1;
Fig. 6 is a perspective view of the first rollers and the second rollers of Fig. 1;
Fig. 7 is a block diagram illustrating a control configuration of an orientation adjustment apparatus of a second embodiment;
Fig. 8 is a top view of the orientation adjustment apparatus of Fig. 7;
Fig. 9 is a block diagram illustrating a control configuration of an orientation adjustment apparatus of a third embodiment;
Fig. 10 is a side view of a first conveyor part and a third conveyor part of Fig. 9 as seen from the first conveyance width direction side Y1;
Fig. 11 is a side view of a second conveyor part and a fourth conveyor part of Fig. 9 as seen from the second conveyance width direction side Y2;
Fig. 12 is a front view of third rollers and fourth rollers of Fig. 9 as seen from the upstream side X1;
Fig. 13 is a perspective view of first rollers, second rollers, the third rollers, and the fourth rollers of Fig. 9; and
Fig. 14 is a side view of a second conveyor part and a fourth conveyor part in an orientation adjustment apparatus of a fourth embodiment as seen from the second conveyance width direction side Y2.

Description of Embodiments

[First Embodiment]

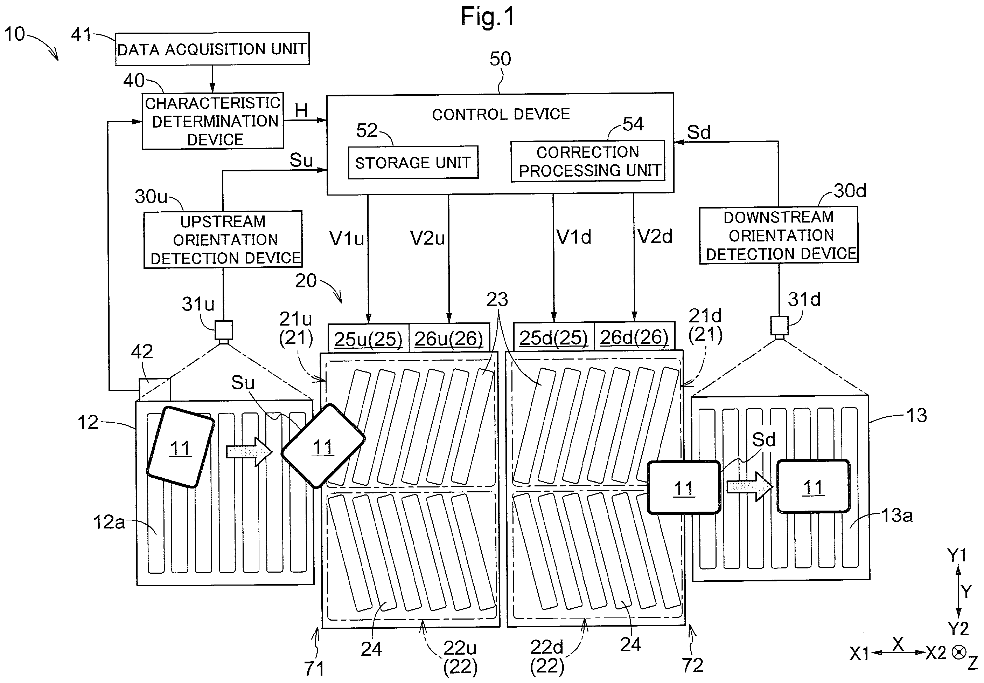

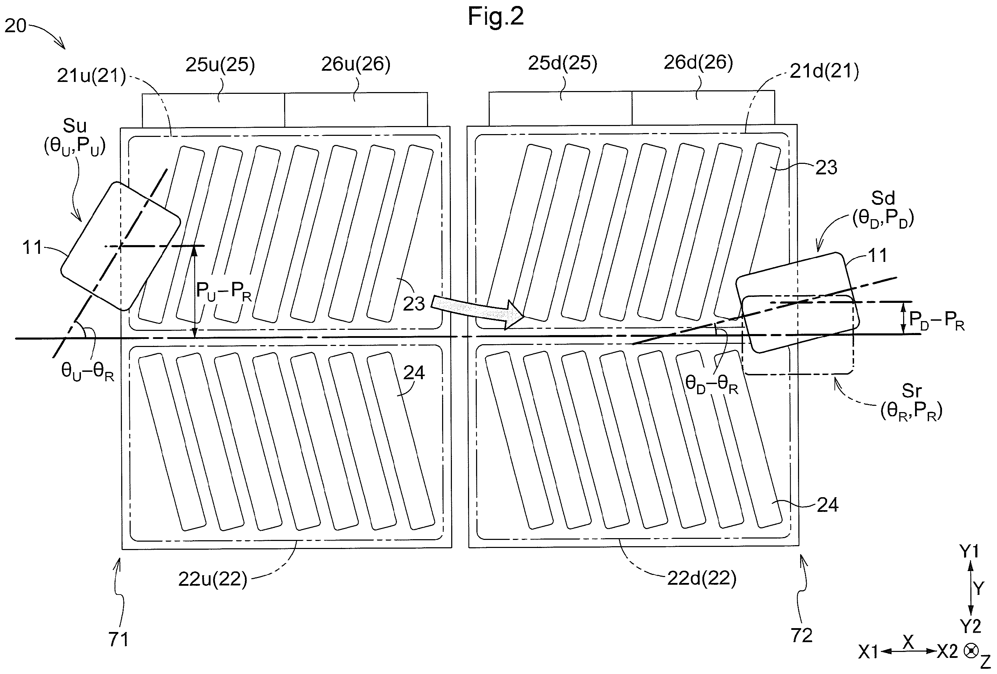

Hereinafter, an orientation adjustment apparatus 10 according to a first embodiment will be described with reference to the drawings. Fig. 1 is a block diagram illustrating a control configuration of the orientation adjustment apparatus 10 of the present embodiment. The orientation adjustment apparatus 10 includes an orientation adjustment conveyor 20 that adjusts an orientation S of a conveyance target 11 while conveying the conveyance target 11 along a prescribed conveyance direction X. Fig. 2 is a top view of the orientation adjustment conveyor 20. The conveyance target 11 is not particularly limited and examples thereof include a plurality of packages that are different from each other in outer shape, size, weight, and the like. The conveyance target 11 is preferably luggage inspected at an airport. Here, a direction orthogonal to the conveyance direction X will be referred to as a conveyance width direction Y. In addition, a direction along a perpendicular direction will be referred to as a vertical direction Z. In addition, an upstream side X1 refers to an upstream side in the conveyance direction X, and a downstream side X2 refers to a downstream side in the conveyance direction X.

The orientation S of the conveyance target 11 is at least an angle $\theta$ (°) of the conveyance target 11 as seen in a plan view. In the present embodiment, the orientation S of the conveyance target 11 is the angle $\theta$ of the conveyance target 11 as seen in the plan view and a position P (mm) of the conveyance target 11 in the conveyance width direction Y. The angle $\theta$ of the conveyance target 11 as seen in the plan view is, for example, an angle as seen in the vertical direction and is the angle of the conveyance target 11 related to a case where a target angle $\theta_R$ of the conveyance target 11 in a target orientation Sr is

3

0 (°). The position P of the conveyance target 11 in the conveyance width direction Y is, for example, the position of the conveyance target 11 related to a case where a target position $P_R$ of the conveyance target 11 in the target orientation Sr is 0 (mm). The target orientation Sr of the conveyance target 11 may be determined for each type of the conveyance target 11. In an example of Fig. 2, the angle θ in a state where a long side of the conveyance target 11 is parallel to the conveyance direction X is the target angle $θ_R$, that is, 0 (°) and a position at which the position P of the center of the conveyance target 11 as seen in the vertical direction overlaps with the center of the orientation adjustment conveyor 20 in the conveyance width direction Y is the target position $P_R$, that is, 0 (mm). Examples of the center of the conveyance target 11 include the center of gravity of the conveyance target 11 and a midpoint (in other words, a point at which diagonal lines intersect each other) of a long side and a short side of the conveyance target 11.

The orientation adjustment conveyor 20 includes a first conveyor part 21 and a second conveyor part 22 that are disposed in parallel to be adjacent to each other in the conveyance width direction Y and the orientation adjustment conveyor 20 is configured such that a conveyance speed V1 (m/s) of the first conveyor part 21 and a conveyance speed V2 (m/s) of the second conveyor part 22 are able to be made different from each other.

Here, a side in the conveyance width direction Y on which the first conveyor part 21 is disposed with respect to the second conveyor part 22 will be referred to as a first conveyance width direction side Y1 and a side opposite to the first conveyance width direction side Y1 will be referred to as a second conveyance width direction side Y2. In addition, regarding each of the first conveyor part 21 and the second conveyor part 22, one of an upstream-side end portion and a downstream-side end portion will be referred to as a first end portion 71 and the other of the upstream-side end portion and the downstream-side end portion will be referred to as a second end portion 72.

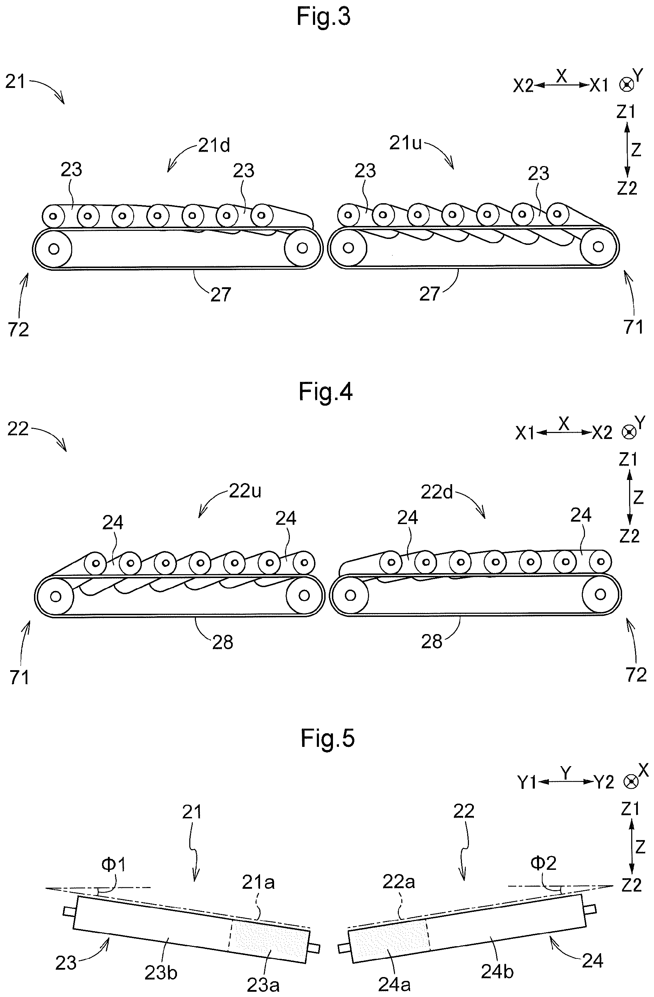

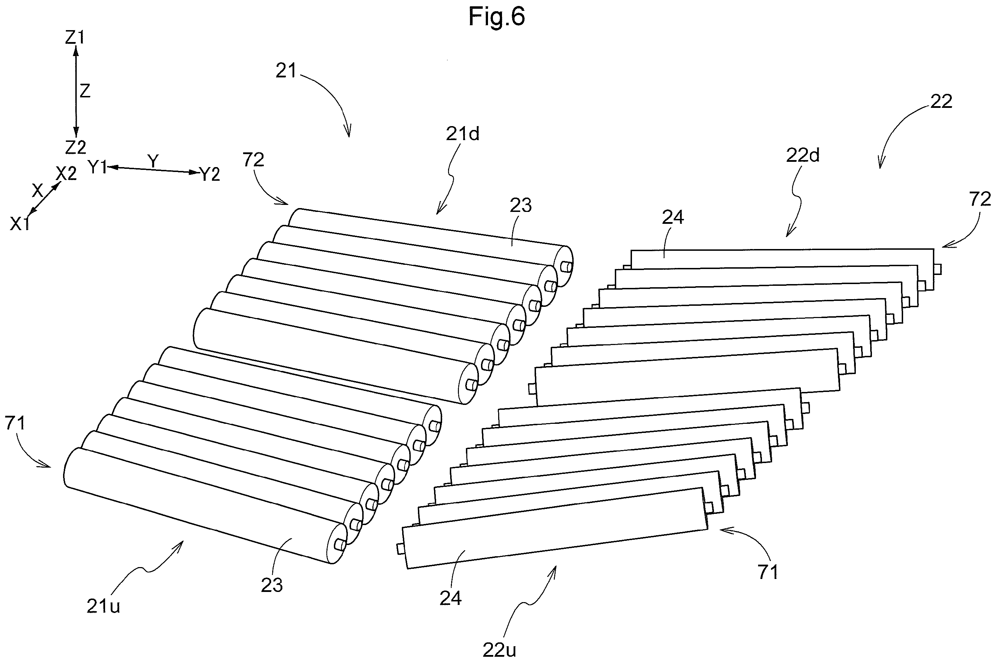

Fig. 3 is a side view of the first conveyor part 21 as seen from the first conveyance width direction side Y1. Fig. 4 is a side view of the second conveyor part 22 as seen from the second conveyance width direction side Y2. In the present embodiment, the first conveyor part 21 includes a plurality of first rollers 23 and the second conveyor part 22 includes a plurality of second rollers 24. Fig. 5 is a front view of the first rollers 23 and the second rollers 24 as seen from the upstream side X1 in the conveyance direction X. Fig. 6 is a perspective view of the first rollers 23 and the second rollers 24.

As shown in Figs. 3, 5, and 6, a conveyance surface 21a of the first conveyor part 21 is inclined in the conveyance width direction Y to become closer to a lower side Z2 in the vertical direction Z toward the second conveyance width direction side Y2 at the first end portion 71 and is configured such that an inclination angle φ1 with respect to a horizontal plane in the conveyance width direction Y gradually decreases toward the second end portion 72. In the present embodiment, as shown in Fig. 1, the first conveyor part 21 is a roller conveyor in which the plurality of first rollers 23 are disposed to be arranged in the conveyance direction X and each of the first rollers 23 has a rotation axis inclined to become closer to the downstream side X2 in the conveyance direction X toward the first conveyance width direction side Y1.

In the example in the drawing, the first end portions 71 are upstream-side end portions of the first conveyor part 21 and the second conveyor part 22 and the second end portions 72 are downstream-side end portions of the first conveyor part 21 and the second conveyor part 22. Therefore, the conveyance surface 21a and a conveyance surface 22a become more horizontal on the downstream side X2 of the first conveyor part 21 and the second conveyor part 22 and thus the conveyance target 11 is able to be smoothly conveyed at a connection portion with respect to a conveyor that is connected to the first conveyor part 21 and the second conveyor part 22 on the downstream side X2 in a case where the conveyor has a horizontal conveyance surface. Note that the first end portions 71 may be the downstream-side end portions of the first conveyor part 21 and the second conveyor part 22 and the second end portions 72 may be the upstream-side end portions of the first conveyor part 21 and the second conveyor part 22. In this case, the conveyance target 11 is able to be smoothly conveyed at a connection portion with respect to a conveyor that is connected to the first conveyor part 21 and the second conveyor part 22 on the upstream side X1 in a case where the conveyor has a horizontal conveyance surface.

As shown in Fig. 5, in the present embodiment, surfaces of first specific regions 23a, which are partial regions of the first rollers 23 in the conveyance width direction Y, are formed of materials of which the friction coefficient is high compared to first outer regions 23b, which are regions closer to the first conveyance width direction side Y1 than the first specific regions 23a are. In addition, as shown in Fig. 3, the first conveyor part 21 includes first driving belts 27 that drive the plurality of first rollers 23 in the present embodiment. The first driving belts 27 are in contact with lower surfaces of the first outer regions 23b of the plurality of first rollers 23 and are configured to transmit a drive force. Preferably, the first driving belts 27 do not come into contact with the first specific regions 23a.

As shown in Figs. 4 to 6, the conveyance surface 22a of the second conveyor part 22 is inclined in the conveyance width direction Y to become closer to the lower side Z2 in the vertical direction Z toward the first conveyance width direction side Y1 at the first end portion 71 and is configured such that an inclination angle φ2 with respect to the horizontal plane in the conveyance width direction Y gradually decreases toward the second end portion 72. In the present embodiment, as shown in Fig. 1, the second conveyor part 22 is a roller conveyor in which the plurality of second rollers 24 are disposed to be arranged in the conveyance direction X and each of the second rollers 24 has a rotation axis inclined to become closer to the downstream side X2 in the conveyance direction X toward the second conveyance width direction side Y2.

As shown in Fig. 5, in the present embodiment, surfaces of second specific regions 24a, which are partial regions of the second rollers 24 in the conveyance width direction Y, are formed of materials of which the friction coefficient is high compared to second outer regions 24b, which are regions closer to the second conveyance width direction side Y2 than the second specific regions 24a are. In addition, as shown in Fig. 4, the second conveyor part 22 includes second driving belts 28 that drive the plurality of second rollers 24 in the present embodiment. The second driving belts 28 are in contact with lower surfaces of the second outer regions 24b of the plurality of second rollers 24 and are configured to transmit a drive force. Preferably, the second driving belts 28 do not come into contact with the second specific regions 24a.

In the present embodiment, the first conveyor part 21 is configured such that a conveyance speed V1u (m/s) at a first upstream-side section 21u, which is a section on the upstream side X1, and a conveyance speed V1d (m/s) at a first downstream-side section 21d, which is a section on the downstream side X2 with respect to the first upstream-side section 21u, are able to be made different from each other. In addition, the second conveyor part 22 is configured such that a conveyance speed V2u (m/s) at a second upstream-side section 22u, which is a section on the upstream side X1, and a conveyance speed V2d (m/s) at a second downstream-side section 22d, which is a section on the downstream side X2 with respect to the second upstream-side section 22u, are able to be made different from each other. In the example in the drawing, the first upstream-side section 21u and the first downstream-side section 21d are adjacent to each other in the conveyance direction X. In addition, the second upstream-side section 22u and the second downstream-side section 22d are adjacent to each other in the conveyance direction X.

In addition, in the present embodiment, the orientation adjustment conveyor 20 includes a first driving device 25 that drives the first conveyor part 21 and a second driving device 26 that drives the second conveyor part 22. Therefore, the conveyance speed V1 (m/s) and the conveyance speed V2 (m/s) are able to be made different from each other.

In the present embodiment, the first driving device 25 includes a first upstream driving device 25u and a first downstream driving device 25d and since the first upstream driving device 25u drives the first rollers 23 of the first upstream-side section 21u and the first downstream driving device 25d drives the first rollers 23 of the first downstream-side section 21d by means of the first driving belts 27 shown in Fig. 3, the conveyance speed V1u and the conveyance speed V1d are able to be made different from each other. In addition, in the present embodiment, the second driving device 26 includes a second upstream driving device 26u and a second downstream driving device 26d and since the second upstream driving device 26u drives the second rollers 24 of the second upstream-side section 22u and the second downstream driving device 26d drives the second rollers 24 of the second downstream-side section 22d by means of the second driving belts 28 shown in Fig. 4, the conveyance speed V2u and the conveyance speed V2d are able to be made different from each other.

In the present embodiment, the orientation adjustment apparatus 10 includes an upstream-side base unit 12 provided on the upstream side X1 with respect to the orientation adjustment conveyor 20. In the example in the drawing, the upstream-side base unit 12 is a roller conveyor in which a plurality of upstream rollers 12a are disposed to be arranged in the conveyance direction X and a rotation axis of each of the upstream rollers 12a is a direction along the conveyance width direction Y. Therefore, the orientation S of the conveyance target 11 is not changed on the upstream-side base unit 12.

In the present embodiment, the orientation adjustment apparatus 10 includes an upstream-side orientation detection device 30u that detects the orientation S of the conveyance target 11 at an upstream-side end portion of the orientation adjustment conveyor 20. In the example of Fig. 1, the upstream-side end portion of the orientation adjustment conveyor 20 is the first end portion 71. Here, the actual orientation S of the conveyance target 11 detected by the upstream-side orientation detection device 30u will be referred to as an upstream-side actual orientation Su. A position at which the upstream-side actual orientation Su is detected may be the upstream-side end portion of the orientation adjustment conveyor 20. In addition, in a case where the orientation S of the conveyance target 11 is not changed on the upstream side X1 with respect to the orientation adjustment conveyor 20, a position at which the upstream-side actual orientation Su is detected may be closer to the upstream side X1 than the upstream-side end portion is.

In the example in the drawing, the upstream-side orientation detection device 30u detects the orientation S of the conveyance target 11 at the upstream-side base unit 12. Since the orientation S of the conveyance target 11 is not changed on the upstream-side base unit 12 as described above, the orientation S of the conveyance target 11 detected by the upstream-side orientation detection device 30u at the upstream-side base unit 12 is the same as the upstream-side actual orientation Su, which is the orientation S at the upstream-side end portion of the orientation adjustment conveyor 20. The upstream-side orientation detection device 30u includes a camera 31u provided at, for example, the upstream-side base unit 12 to detect an upstream-side actual angle $\theta_U$ which is the actual angle of the conveyance target 11 at the upstream-side end portion and an upstream-side actual position $P_U$ which is the actual position of the conveyance target 11, that is, the upstream-side actual orientation Su.

In the present embodiment, the orientation adjustment apparatus 10 includes a downstream-side base unit 13 provided on the downstream side X2 with respect to the orientation adjustment conveyor 20. In the example in the drawing, the downstream-side base unit 13 is a roller conveyor in which a plurality of downstream rollers 13a are disposed to be arranged in the conveyance direction X and a rotation axis of each of the downstream rollers 13a is a direction along the conveyance width direction Y. Therefore, the orientation S of the conveyance target 11 is not changed on the downstream-side base unit 13.

In the present embodiment, the orientation adjustment apparatus 10 further includes a downstream-side orientation detection device 30d that detects the orientation S of the conveyance target 11 at a downstream-side end portion of the orientation adjustment conveyor 20. In the example of Fig. 1, a downstream-side end portion of the orientation adjustment conveyor 20 is the second end portion 72. Here, the actual orientation S of the conveyance target 11 detected by the downstream-side orientation detection device 30d will be referred to as a downstream-side actual orientation Sd. A position at which the downstream-side actual orientation Sd is detected may be the downstream-side end portion of the orientation adjustment conveyor 20. In addition, in a case where the orientation S of the conveyance target 11 is not changed on the downstream side X2 with respect to the orientation adjustment conveyor 20, a position at which the downstream-side actual orientation Sd is detected may be closer to the downstream side X2 than the downstream-side end portion is.

In the example in the drawing, the downstream-side orientation detection device 30d detects the orientation S of the conveyance target 11 at the downstream-side base unit 13. Since the orientation S of the conveyance target 11 is not changed on the downstream-side base unit 13 as described above, the orientation S of the conveyance target 11 detected by the downstream-side orientation detection device 30d at the downstream-side base unit 13 is the same as the downstream-side actual orientation Sd, which is the orientation S at the downstream-side end portion of the orientation adjustment conveyor 20. The downstream-side orientation detection device 30d includes a camera 31d provided at, for example, the downstream-side base unit 13 to detect a downstream-side actual angle $\theta_D$ which is the actual angle of the conveyance target 11 at the downstream-side end portion and a downstream-side actual position $P_D$ which is the actual position of the conveyance target 11, that is, the downstream-side actual orientation Sd. Note that the downstream-side orientation detection device 30d and the upstream-side orientation detection device 30u may be the same device as each other. Note that the downstream-side orientation detection device 30d and the upstream-side orientation detection device 30u may be the same device as each other.

In the present embodiment, the orientation adjustment apparatus 10 includes a characteristic determination device 40 that determines the characteristics of the conveyance target 11 on the upstream side X1 with respect to the orientation adjustment conveyor 20. The characteristics of the conveyance target 11 may be acquired by a characteristic acquisition unit provided in the orientation adjustment apparatus 10 and the characteristics may be acquired as conveyance target information including the characteristics is transmitted from an external device and is received by a data acquisition unit 41 provided in the orientation adjustment apparatus 10. In the present embodiment, the characteristic determination device 40 determines characteristics acquired by a characteristic acquisition unit provided at the upstream-side base unit 12. In the example in the drawing, the upstream-side orientation detection device 30u also functions as the characteristic acquisition unit that acquires the characteristics of the conveyance target 11 such as the shape thereof. In addition, a weight measurement unit 42 that is provided at the upstream-side base unit 12 and that acquires characteristics such as a weight or the center of gravity also functions as the characteristic acquisition unit.

In the present embodiment, the characteristic determination device 40 sets a characteristic value H indicating the degree of difficulty of changing an orientation in accordance with the characteristics of the conveyance target 11. A characteristic of the conveyance target 11 is preferably the shape of a bottom surface of the conveyance target 11. The shape of the bottom surface of the conveyance target 11 may be acquired by, for example, the camera 31u provided at the upstream-side base unit 12 and may be acquired by a scanning device such as a millimeter-wave CT scanner. In addition, the characteristics of the conveyance target 11 may be the size, the shape, the weight, and the like of the conveyance target 11. Examples of the size of the conveyance target 11 include a dimension of a long side L1 of the conveyance target 11, the area as seen in a plan view, the area of the bottom surface, and the like. Examples of the shape of the conveyance target 11 include a ratio between the long side L1 and a short side L2 as seen in the vertical direction and the shape of the bottom surface. Examples of the material of the conveyance target 11 include the material, the hardness, the surface roughness of the bottom surface of the conveyance target 11, and the like. The larger the characteristic value H is, the higher the degree of difficulty of changing the orientation of the conveyance target 11 is. Although the characteristic value H is preferably set in accordance with the shape of the bottom surface of the conveyance target 11, the characteristic value H may be set in accordance with the above-described plurality of characteristics.

The orientation S in which the conveyance target 11 is to face at the downstream-side end portion of the orientation adjustment conveyor 20 will be referred to as the target orientation Sr. The orientation adjustment apparatus 10 includes a control device 50 that controls the orientation adjustment conveyor 20. The control device 50 controls a speed difference $\Delta V$ between the conveyance speed V1 of the first conveyor part 21 and the conveyance speed V2 of the second conveyor part 22 to perform orientation adjustment control in which the orientation S of the conveyance target 11 that is conveyed in a state of being placed on both of the first conveyor part 21 and the second conveyor part 22 is changed. In the orientation adjustment control, the control device 50 increases the speed difference $\Delta V$ as a pre-adjustment orientation difference $\Delta Su$, which is a difference between the upstream-side actual orientation Su and the target orientation Sr, increases and increases the speed difference $\Delta V$ as the characteristic value H, which is set in accordance with the characteristics of the conveyance target 11 determined by the characteristic determination device 40 and which indicates the degree of difficulty of changing the orientation, increases, based on the pre-adjustment orientation difference ΔSu and the characteristic value H.

The conveyance target 11 is preferably conveyed by the orientation adjustment conveyor 20 one by one with the control device 50 controlling the speed difference ΔV. In this case, the speed difference ΔV may be changed while the conveyance target 11 is passing through the orientation adjustment conveyor 20 thereon. However, in the present embodiment, the speed difference ΔV is not changed from an initial speed difference ΔVa which is determined based on the pre-adjustment orientation difference ΔSu, which is a difference between the upstream-side actual orientation Su and the target orientation Sr, and the characteristic value H.

In the present embodiment, for example, an adjustment rate of the conveyance speed V1 of the first conveyor part 21 with respect to a conveyance speed V (m/s) of the orientation adjustment conveyor 20 will be referred to as an adjustment rate u1 (= 100 · V1/V) and an adjustment rate of the conveyance speed V2 of the second conveyor part 22 with respect to the conveyance speed V of the orientation adjustment conveyor 20 will be referred to as an adjustment rate u2 (= 100 · V2/V). That is, since V1 = V · u1/100 and V2 = V · u2/100, the conveyance speed V1 is able to be determined based on the conveyance speed V (m/s) of the orientation adjustment conveyor 20 and the adjustment rate u1 (%), and the conveyance speed V2 is able to be determined based on the conveyance speed V (m/s) and the adjustment rate u2 (%).

The adjustment rate u1 (%) is able to be represented by Equation (1a) as follows, and the adjustment rate u2 (%) is able to be represented by Equation (2a) as follows.

$$u1 = 100 + (K_\theta + K_H \cdot H) \cdot (\theta_U - \theta_R) + K_P (P_U - P_R) \quad (1a)$$

$$u2 = 100 - (K_\theta + K_H \cdot H) \cdot (\theta_U - \theta_R) - K_P (P_U - P_R) \quad (2a)$$

Here, $K_\theta$ is a weighting coefficient with respect to the angle θ, $K_P$ is a weighting coefficient with respect to the position P, $K_H$ is a weighting coefficient with respect to the characteristic value H, $\theta_R$ is a target angle at the time of the target orientation Sr, and $P_R$ is a target position at the time of the target orientation Sr. The target angle $\theta_R$ and the target position $P_R$ correspond to the target orientation Sr, and the upstream-side actual angle $\theta_U$ and the upstream-side actual position $P_U$ correspond to the upstream-side actual orientation Su.

The characteristic value H is preferably a value set in accordance with the shape of the bottom surface of the conveyance target 11. However, in a case where the characteristic value H is set in accordance with a plurality of characteristics, a weighting coefficient with respect to the characteristic value H may be set for each of the plurality of characteristics as represented by Equation (3a) as follows.

$$K_H \cdot H = K_{HA} \cdot H_A + K_{HB} \cdot HB + K_{HC} \cdot H_C + K_{HD} \cdot H_D \quad (3a)$$

In Equation (3a), for example, a characteristic value $H_A$ is a value corresponding to the shape of the bottom surface of the conveyance target 11, a characteristic value $H_B$ is a weight, a characteristic value $H_C$ is a value obtained by dividing the long side L1 of the conveyance target 11 by the short side L2, and a characteristic value $H_D$ is the reciprocal of the friction coefficient of the bottom surface of the conveyance target 11.

In the present embodiment, the control device 50 includes a storage unit 52 and a correction processing unit 54. The storage unit 52 stores learning information indicating a relationship between the pre-adjustment orientation difference ΔSu, the characteristic value H, a control coefficient K for determining the speed difference ΔV based on the pre-adjustment orientation difference ΔSu and the characteristic value H, and a post-adjustment orientation difference ΔSd which is a difference between the downstream-side actual orientation Sd resulting from the orientation adjustment control and the target orientation Sr. The correction processing unit 54 corrects the control coefficient K based on the learning information stored in the storage unit 52.

In the present embodiment, for example, in a case where an adjustment rate at the first conveyor part 21 for the i-th conveyance target 11 is $u1_i$, the adjustment rate $u1_i$ is able to be represented by Equation (1b) as follows. In addition, in a case where an adjustment rate at the second conveyor part 22 for the i-th conveyance target 11 is $u2_i$, the adjustment rate $u2_i$ is able to be represented by Equation (2b) as follows.

$$u1_i = 100 + (K_{\theta i} + K_{Hi} \cdot H) \cdot (\theta_U - \theta_R) + K_{Pi} (P_U - P_R) \quad (1b)$$

$$u2_i = 100 - (K_{\theta i} + K_{Hi} \cdot H) \cdot (\theta_U - \theta_R) - K_{Pi} (P_U - P_R) \quad (2b)$$

Here, $K_{\theta i}$ is a weighting coefficient with respect to the angle θ, $K_{Pi}$ is a weighting coefficient with respect to the

position P, and $KH_i$ is a weighting coefficient with respect to the characteristic value H.

The angle and the position of the conveyance target 11 at the downstream-side end portion resulting from orientation adjustment control that is performed by the control device 50 based on the adjustment rate $u1_i$ and the adjustment rate $u2_i$ will be referred to as the downstream-side actual angle $\theta_D$ and the downstream-side actual position $P_D$, respectively. The angle $\theta_R$ and the position $P_R$ correspond to the target orientation Sr, the downstream-side actual angle $\theta_D$ and the downstream-side actual position $P_D$ correspond to the downstream-side actual orientation Sd, and an angle $\theta_D - \theta_R$ and a position $P_D - P_R$ correspond to the post-adjustment orientation difference $\Delta Sd$.

In the present embodiment, the storage unit 52 stores learning information indicating a relationship between the pre-adjustment orientation difference $\Delta Su$ (an angle $\theta_U - \theta_R$ and a position $P_U - P_R$), the characteristic value H, the control coefficient K (the weighting coefficients $K_{\theta i}$, $K_{P i}$, and $K_{H i}$) for determining the speed difference $\Delta V$ based on the pre-adjustment orientation difference $\Delta Su$ and the characteristic value H, and the post-adjustment orientation difference $\Delta Sd$ (the angle $\theta_D - \theta_R$ and the position $P_D - P_R$).

Furthermore, a weighting coefficient with respect to the angle $\theta$ regarding the (i + 1)-th conveyance target 11 will be referred to as $K\theta_{i+1}$, a weighting coefficient with respect to the position P will be referred to as a weighting coefficient $KP_{i+1}$, and a weighting coefficient with respect to the characteristic value H will be referred to as a weighting coefficient $KH_{i+1}$.

The correction processing unit 54 corrects the control coefficient K (the weighting coefficients $K\theta_{i+1}$, $KP_{i+1}$, and $KH_{i+1}$) based on the learning information stored in the storage unit 52. It is preferable that the control coefficient K is changed in a case where the post-adjustment orientation difference $\Delta Sd$ is equal to or greater than a threshold value J and the control coefficient K is not changed in a case where the post-adjustment orientation difference $\Delta Sd$ is smaller than the threshold value J. For example, in a case where the absolute value of the angle $\theta_D - \theta_R$ is smaller than a threshold value $\theta_J$, the weighting coefficient $K_{H i+1}$ is represented by Equation (4b), and in a case where the absolute value of the angle $\theta_D - \theta_R$ is equal to or greater than the threshold value $\theta_J$, the weighting coefficient $K_{H i+1}$ is represented by Equation (5b).

$$K_{Hi} + 1 = K_{Hi} \quad (4b)$$

$$K_{Hi+1} = K_{Hi} + \alpha \quad (5b)$$

Here, $\alpha$ is a predetermined correction value. The correction value $\alpha$ is, for example, a positive value in a case where the angle $\theta_D - \theta_R$ is positive, and is a negative value in a case where the angle $\theta_D - \theta_R$ is negative. The threshold value J, the threshold value $\theta_J$, and the correction value $\alpha$ may be determined through an experiment, machine learning, or the like.

[Second Embodiment]

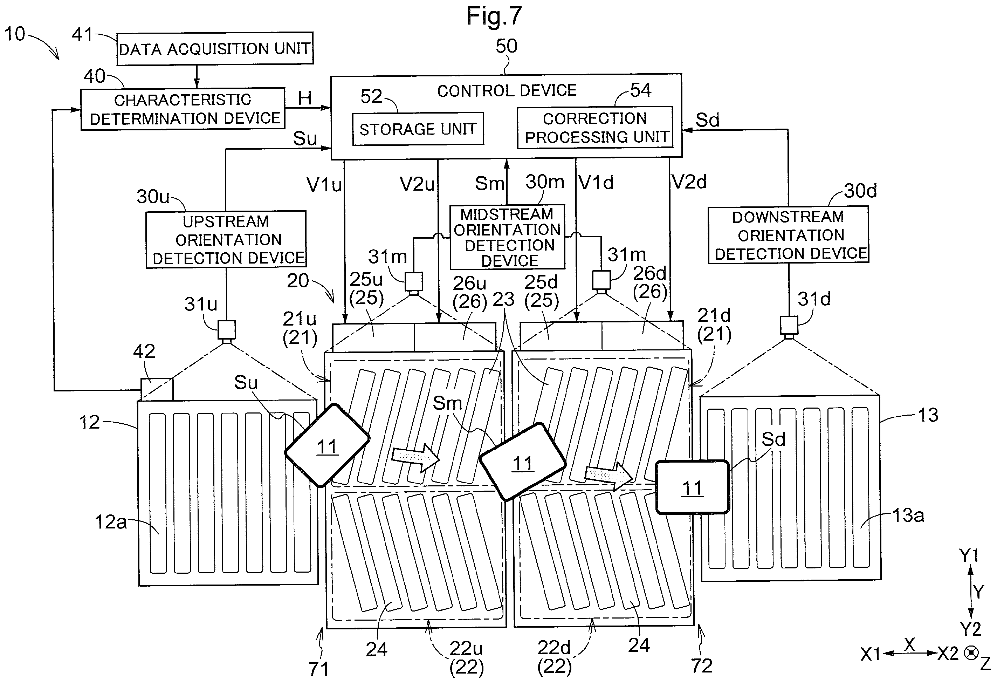

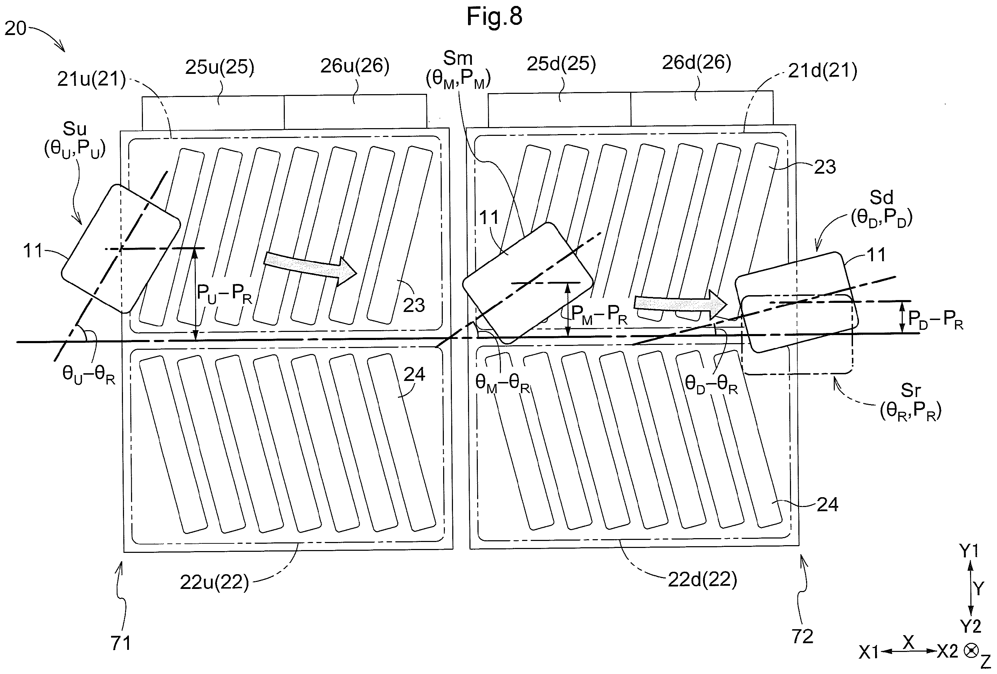

Hereinafter, the orientation adjustment apparatus 10 according to a second embodiment will be described with reference to the drawings. Fig. 7 is a block diagram illustrating a control configuration of the orientation adjustment apparatus 10 of the present embodiment. Fig. 8 is a top view of the orientation adjustment conveyor 20 of the present embodiment. The present embodiment is different from the first embodiment in that the orientation adjustment apparatus 10 includes a during-conveyance orientation detection device 30m. Hereinafter, a difference from the first embodiment will be mainly described. In addition, a point that is not particularly described is the same as that in the first embodiment.

As shown in Figs. 7 and 8, in the present embodiment, the orientation adjustment apparatus 10 further includes the during-conveyance orientation detection device 30m that detects the orientation S of the conveyance target 11 over the entire region of the orientation adjustment conveyor 20. The actual orientation S of the conveyance target 11 detected by the during-conveyance orientation detection device 30m will be referred to as a during-conveyance actual orientation Sm. In an example in the drawing, the orientation adjustment conveyor 20 includes the during-conveyance orientation detection device 30m. The during-conveyance orientation detection device 30m includes a camera 31m provided at, for example, the orientation adjustment conveyor 20 to detect a during-conveyance actual angle $\theta_M$ which is the actual angle of the conveyance target 11 over the entire region of the orientation adjustment conveyor 20 and an during-conveyance actual position $P_M$ which is the actual position of the conveyance target 11, that is, the during-conveyance actual orientation Sm.

In the present embodiment, the control device 50 determines the initial speed difference $\Delta Va$ based on the pre-adjustment orientation difference $\Delta Su$ which is a difference between the upstream-side actual orientation Su and the target orientation Sr and the characteristic value H. Thereafter, while the conveyance target 11 is being conveyed by the orientation adjustment conveyor 20, the control device 50 determines, based on a during-conveyance orientation difference $\Delta Sm$ which is a difference between the during-conveyance actual orientation Sm and the target orientation Sr and the characteristic value H, the speed difference $\Delta V$ as needed such that the speed difference $\Delta V$ increases as the

during-conveyance orientation difference ΔSm increases and the speed difference ΔV increases as the characteristic value H increases.

In the present embodiment, an adjustment rate u1m (= 100 · V1/V) of the conveyance speed V1 of the first conveyor part 21 with respect to the conveyance speed V (m/s) of the orientation adjustment conveyor 20 an adjustment rate u2m (= 100 · V2/V) of the conveyance speed V2 of the second conveyor part 22 with respect to the conveyance speed V of the orientation adjustment conveyor 20 are determined as needed during conveyance of the conveyance target 11, so that the speed difference ΔV is changed as needed. The adjustment rate u1m (%) during conveyance of the conveyance target 11 is able to be represented by Equation (1c) as follows, and the adjustment rate u2m (%) is able to be represented by Equation (2c) as follows.

$$u1 = 100 + (K_\theta + K_H \cdot H) \cdot (\theta_M - \theta_R) + K_P (P_M - P_R) \quad (1c)$$

$$u2 = 100 - (K_\theta + K_H \cdot H) \cdot (\theta_M - \theta_R) - K_P (P_M - P_R) \quad (2c)$$

The during-conveyance actual angle $\theta_M$ and the during-conveyance actual position $P_M$ correspond to the during-conveyance actual orientation Sm and an angle $\theta_M - \theta_R$ and a position $P_M - P_R$ correspond to the during-conveyance orientation difference ΔSm.

In the present embodiment, while the conveyance target 11 is being conveyed by the orientation adjustment conveyor 20 after determination of the initial speed difference ΔVa, the control device 50 changes, based on the during-conveyance orientation difference ΔSm (the angle $\theta_M - \theta_R$ and the position $P_M - P_R$) and the characteristic value H, the speed difference ΔV as needed such that the speed difference ΔV increases as the during-conveyance orientation difference ΔSm (the angle $\theta_M - \theta_R$ and the position $P_M - P_R$) increases and the speed difference ΔV increases as the characteristic value H increases. Proportional-integral control computation (PI control computation), proportional-integral-derivative control computation (PID control computation), or the like may be used in a case where the control device 50 changes the speed difference ΔV as needed in accordance with the degree of the during-conveyance orientation difference ΔSm. In the present embodiment, it is preferable that the control device 50 includes the storage unit 52 and the correction processing unit 54. However, the control device 50 may not include the storage unit 52 and the correction processing unit 54.

[Third Embodiment]

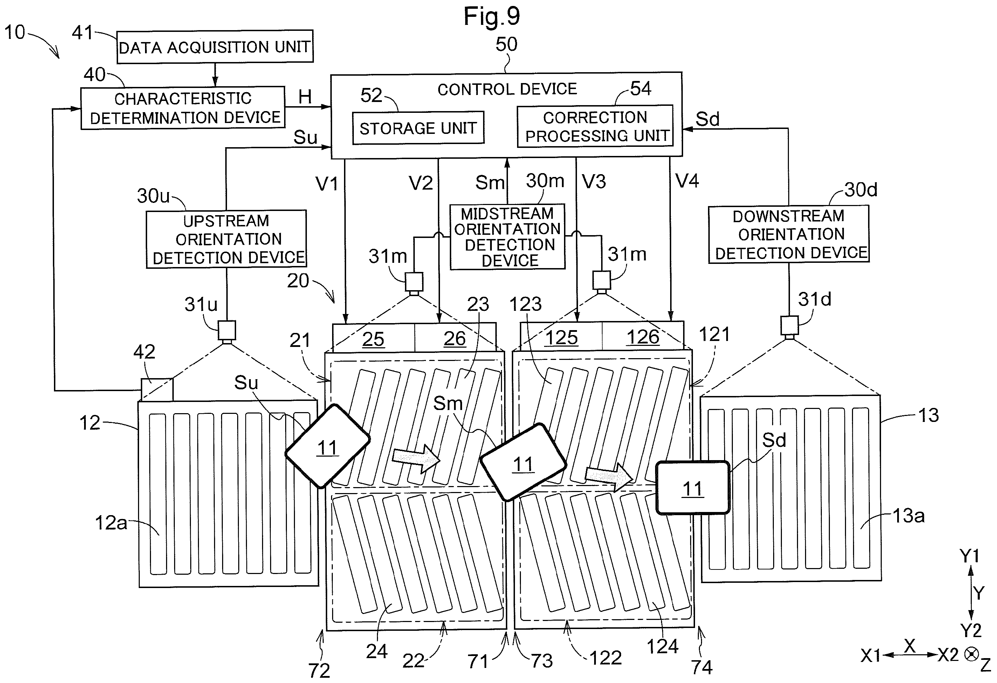

Hereinafter, the orientation adjustment apparatus 10 according to a third embodiment will be described with reference to the drawings. Fig. 9 is a block diagram illustrating a control configuration of the orientation adjustment apparatus 10 of the present embodiment. The present embodiment is different from the second embodiment in that the orientation adjustment conveyor 20 includes a third conveyor part 121 and a fourth conveyor part 122. Hereinafter, a difference from the second embodiment will be mainly described. In addition, a point that is not particularly described is the same as that in the second embodiment. Although the first conveyor part 21 in the present embodiment is not divided into the first upstream-side section 21u and the first downstream-side section 21d, the first conveyor part 21 may be divided into the first upstream-side section 21u and the first downstream-side section 21d. Similarly, although the second conveyor part 22 in the present embodiment is not divided into the second upstream-side section 22u and the second downstream-side section 22d, the second conveyor part 22 may be divided into the second upstream-side section 22u and the second downstream-side section 22d.

In the present embodiment, the orientation adjustment conveyor 20 further includes the third conveyor part 121 that is disposed on the downstream side X2 with respect to the first conveyor part 21 and the fourth conveyor part 122 that is disposed on the downstream side X2 with respect to the second conveyor part 22 and that is disposed on the second conveyance width direction side Y2 with respect to the third conveyor part 121. The orientation adjustment conveyor 20 is configured such that a conveyance speed V3 (m/s) of the third conveyor part 121 and a conveyance speed V4 (m/s) of the fourth conveyor part 122 are able to be made different from each other. In the example in the drawing, the first conveyor part 21 and the third conveyor part 121 are adjacent to each other. In addition, the second conveyor part 22 and the fourth conveyor part 122 are adjacent to each other.

Here, regarding each of the third conveyor part 121 and the fourth conveyor part 122, one of an upstream-side end portion and a downstream-side end portion will be referred to as a third end portion 73 and the other of the upstream-side end portion and the downstream-side end portion will be referred to as a fourth end portion 74. It is preferable that the first end portions 71 are the downstream-side end portions of the first conveyor part 21 and the second conveyor part 22, the second end portions 72 are the upstream-side end portions of the first conveyor part 21 and the second conveyor part 22, the third end portions 73 are upstream-side end portions of the third conveyor part 121 and the fourth conveyor part 122, and the fourth end portions 74 are downstream-side end portions of the third conveyor part 121 and the fourth conveyor part 122.

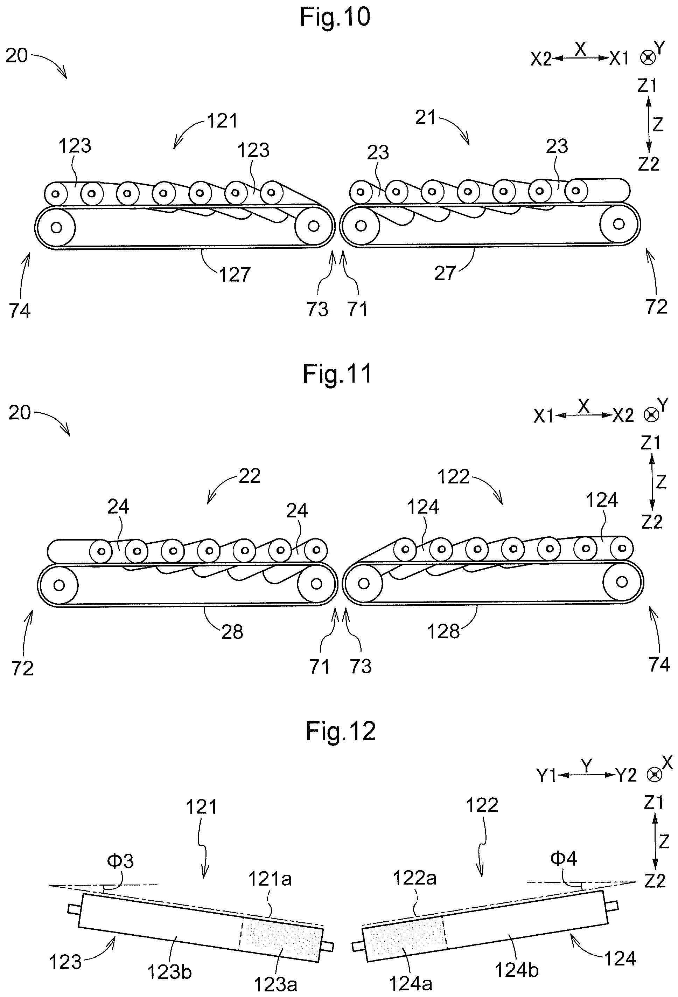

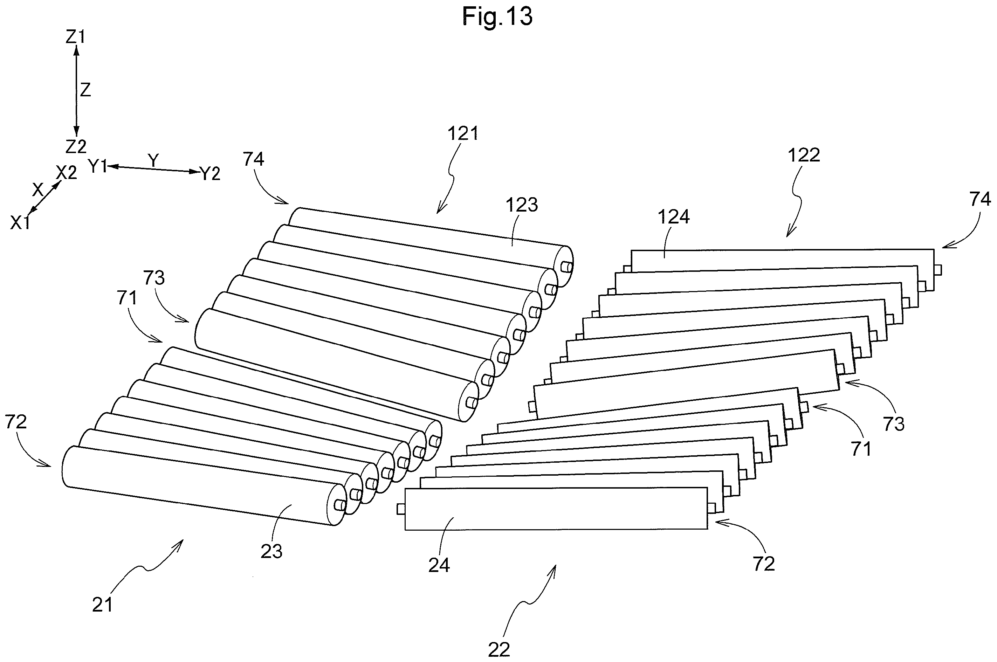

Fig. 10 is a side view of the first conveyor part 21 and the third conveyor part 121 as seen from the first conveyance width direction side Y1. Fig. 11 is a side view of the second conveyor part 22 and the fourth conveyor part 122 as seen from the second conveyance width direction side Y2. In the present embodiment, the third conveyor part 121 includes a plurality of third rollers 123 and the fourth conveyor part 122 includes a plurality of fourth rollers 124. Fig. 12 is a front view of the third rollers 123 and the fourth rollers 124 as seen from the upstream side X1 in the conveyance direction X. Fig. 13 is a perspective view of the first rollers 23, the second rollers 24, the third rollers 123, and the fourth rollers 124.

As shown in Figs. 10, 12, and 13, a conveyance surface 121a of the third conveyor part 121 is inclined in the conveyance width direction Y to become closer to the lower side Z2 in the vertical direction Z toward the second conveyance width direction side Y2 at the third end portion 73 and is configured such that an inclination angle $\varphi 3$ with respect to the horizontal plane in the conveyance width direction Y gradually decreases toward the fourth end portion 74. In the present embodiment, as shown in Fig. 9, the third conveyor part 121 is a roller conveyor in which the plurality of third rollers 123 are disposed to be arranged in the conveyance direction X and each of the third rollers 123 has a rotation axis inclined to become closer to the downstream side X2 in the conveyance direction X toward the first conveyance width direction side Y1.

As shown in Fig. 12, in the present embodiment, surfaces of third specific regions 123a, which are partial regions of the third rollers 123 in the conveyance width direction Y, are formed of materials of which the friction coefficient is high compared to third outer regions 123b, which are regions closer to the first conveyance width direction side Y1 than the third specific region 123a are. In addition, as shown in Fig. 10, the third conveyor part 121 includes third driving belts 127 that drive the plurality of third rollers 123 in the present embodiment. The third driving belts 127 are in contact with lower surfaces of the third outer regions 123b of the plurality of third rollers 123 and are configured to transmit a drive force. Preferably, the third driving belts 127 do not come into contact with the third specific regions 123a.

As shown in Figs. 11 to 13, a conveyance surface 122a of the fourth conveyor part 122 is inclined in the conveyance width direction Y to become closer to the lower side Z2 in the vertical direction Z toward the first conveyance width direction side Y1 at the third end portion 73 and is configured such that an inclination angle $\varphi 4$ with respect to the horizontal plane in the conveyance width direction Y gradually decreases toward the fourth end portion 74. In the present embodiment, as shown in Fig. 9, the fourth conveyor part 122 is a roller conveyor in which the plurality of fourth rollers 124 are disposed to be arranged in the conveyance direction X and each of the fourth rollers 124 has a rotation axis inclined to become closer to the downstream side X2 in the conveyance direction X toward the second conveyance width direction side Y2.

As shown in Fig. 12, in the present embodiment, surfaces of fourth specific regions 124a, which are partial regions of the fourth rollers 124 in the conveyance width direction Y, are formed of materials of which the friction coefficient is high compared to fourth outer regions 124b, which are regions closer to the second conveyance width direction side Y2 than the fourth specific regions 124a are. In addition, as shown in Fig. 11, the fourth conveyor part 122 includes fourth driving belts 128 that drive the plurality of fourth rollers 124 in the present embodiment. The fourth driving belts 128 are in contact with lower surfaces of the fourth outer regions 124b of the plurality of fourth rollers 124 and are configured to transmit a drive force. Preferably, the fourth driving belts 128 do not come into contact with the fourth specific regions 124a.

In the present embodiment, the orientation adjustment conveyor 20 includes a third driving device 125 that drives the third conveyor part 121 and a fourth driving device 126 that drives the fourth conveyor part 122. Accordingly, the orientation adjustment conveyor 20 is able to make the conveyance speed V3 (m/s) of the third conveyor part 121 and the conveyance speed V4 (m/s) of the fourth conveyor part 122 different from each other.

In the example illustrated in Fig. 10, the third driving device 125 drives the third rollers 123 by means of the third driving belts 127. In the example illustrated in Fig. 10, the fourth driving device 126 drives the fourth rollers 124 by means of the fourth driving belts 128. Accordingly, the orientation adjustment conveyor 20 is able to make the conveyance speed V1 (m/s) of the first conveyor part 21 and the conveyance speed V3 (m/s) of the third conveyor part 121 different from each other. In addition, the orientation adjustment conveyor 20 is able to make the conveyance speed V2 (m/s) of the second conveyor part 22 and the conveyance speed V4 (m/s) of the fourth conveyor part 122 different from each other.

[Fourth Embodiment]

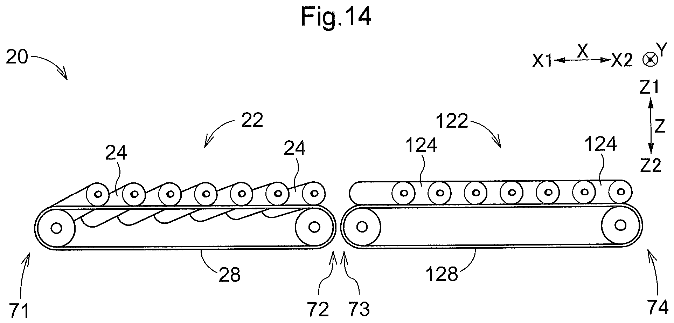

Hereinafter, the orientation adjustment apparatus 10 according to a fourth embodiment will be described with reference to the drawings. Fig. 14 is a side view of the second conveyor part 22 and the fourth conveyor part 122 of the present embodiment as seen from the second conveyance width direction side Y2. The present embodiment is different from the third embodiment in that the conveyance surface 121a of the third conveyor part 121 and the conveyance surface 121a of the fourth conveyor part 122 are approximately horizontal. Hereinafter, a difference from the third embodiment will be mainly described. In addition, a point that is not particularly described is the same as that in the third embodiment.

In an example in Fig. 14, the first end portions 71 are the upstream-side end portions of the first conveyor part 21 and the second conveyor part 22, the second end portions 72 are the downstream-side end portions of the first conveyor part 21 and the second conveyor part 22, the third end portions 73 are the upstream-side end portions of the third conveyor part 121 and the fourth conveyor part 122, and the fourth end portions 74 are the downstream-side end portions of the third conveyor part 121 and the fourth conveyor part 122.

In the present embodiment, the conveyance surface 121a of the third conveyor part 121 and the conveyance surface 121a of the fourth conveyor part 122 are approximately horizontal. Specifically, a rotation axis of each of the third rollers 123 and the fourth rollers 124 is disposed along the horizontal plane. In such a case, it is possible to more appropriately perform orientation adjustment of the conveyance target 11 of which a bottom surface is bent to protrude toward the lower side Z2 by means of the first conveyor part 21 and the second conveyor part 22 and it is possible to more appropriately perform orientation adjustment of the conveyance target 11 of which a bottom surface is planar or almost planar by means of the third conveyor part 121 and the fourth conveyor part 122. Therefore, it is possible to appropriately perform orientation adjustment of the conveyance targets 11 having various bottom surface shapes.

(Other Embodiments)

Next, other embodiments of the orientation adjustment apparatus 10 will be described.

(1) In the above-described embodiments, a configuration in which the first conveyor part 21, the second conveyor part 22, the third conveyor part 121, and the fourth conveyor part 122 of the orientation adjustment conveyor 20 are roller conveyors has been described as an example. However, the present invention is not limited to such a configuration, and for example, the first conveyor part 21, the second conveyor part 22, the third conveyor part 121, and the fourth conveyor part 122 may be belt conveyors, chain conveyors, or other known conveyors.

(2) In the above-described embodiments, a configuration in which each of the first rollers 23 and the third rollers 123 has a rotation axis inclined to become closer to the downstream side X2 in the conveyance direction X toward the first conveyance width direction side Y1 and each of the second rollers 24 and the fourth rollers 124 has a rotation axis inclined to become closer to the downstream side X2 in the conveyance direction X toward the second conveyance width direction side Y2 has been described as an example. However, the present invention is not limited to such a configuration, and for example, the rotation axis of each of the first rollers 23, the second rollers 24, the third rollers 123, and the fourth rollers 124 may be a rotation axis parallel to the conveyance width direction Y.

(3) In the above-described embodiments, a configuration in which the first conveyor part 21 of the orientation adjustment conveyor 20 is driven by the first driving device 25 and the second conveyor part 22 is driven by the second driving device 26 has been described as an example. However, the present invention is not limited to such a configuration, and for example, a configuration may be adopted in which the first upstream-side section 21u and the first downstream-side section 21d of the first conveyor part 21 and the second upstream-side section 22u and the second downstream-side section 22d of the second conveyor part 22 are driven by the same driving device and a transmission that changes the ratio of rotation transmission from the driving device is provided. In addition, conveyance speeds at the first upstream-side section 21u and the first downstream-side section 21d of the first conveyor part 21 may not be able to be made different from each other. In addition, conveyance speeds at the second upstream-side section 22u and the second downstream-side section 22d of the second conveyor part 22 may not be able to be made different from each other.

(4) In the above-described Embodiment 2 and Embodiment 3, a configuration in which the first end portions 71 are the downstream-side end portions of the first conveyor part 21 and the second conveyor part 22, the second end portions 72 are the upstream-side end portions of the first conveyor part 21 and the second conveyor part 22, the third end portions 73 are the upstream-side end portions of the third conveyor part 121 and the fourth conveyor part 122, and the fourth end portions 74 are the downstream-side end portions of the third conveyor part 121 and the fourth conveyor part 122 has been described as an example. In addition, in the above-described Embodiment 4, a configuration in which the first end portions 71 are the upstream-side end portions of the first conveyor part 21 and the second conveyor part 22, the second end portions 72 are the downstream-side end portions of the first conveyor part 21 and the second conveyor part 22, the third end portions 73 are the upstream-side end portions of the third conveyor part 121 and the fourth conveyor part 122, and the fourth end portions 74 are the downstream-side end portions of the third conveyor part 121 and the fourth conveyor part 122 has been described as an example. However, the present invention is not limited to such a configuration, and for example, the third end portions 73 may be the downstream-side end portions of the third conveyor part 121 and the fourth conveyor part 122 and the fourth end portions 74 may be the upstream-side end portions of the third conveyor part 121 and the fourth conveyor part 122.

(5) In the above-described Embodiment 3 and Embodiment 4, a configuration in which the conveyance speed V1 of the first conveyor part 21 and the conveyance speed V3 of the third conveyor part 121 are able to be made different from each other has been described as an example. However, the present invention is not limited to such an example, and for example, the third driving device 125 and the fourth driving device 126 may be the same device so that the conveyance speeds of the first conveyor part 21 and the third conveyor part 121 are the same as each other. Similarly, the conveyance speeds of the second conveyor part 22 and the fourth conveyor part 122 may be the same as each other.

(6) In the above-described embodiments, an example in which the orientation adjustment apparatus 10 includes the upstream-side orientation detection device 30u, the downstream-side orientation detection device 30d, and the characteristic determination device 40 and the control device 50 includes the storage unit 52 and the correction processing unit 54 has been described. However, the present invention is not limited to such an example, and for example, the orientation adjustment apparatus 10 may not include the downstream-side orientation detection device 30d and the control device 50 may not include the storage unit 52 and the correction processing unit 54. In addition, the orientation adjustment apparatus 10 may not include the upstream-side orientation detection device 30u and the characteristic determination device 40.

(7) In the above-described Embodiment 1, a configuration in which the orientation adjustment apparatus 10 includes the upstream-side orientation detection device 30u, the characteristic determination device 40, and the downstream-side orientation detection device 30d has been described as an example. However, the present invention is not limited to such a configuration, and for example, the upstream-side orientation detection device 30u or the downstream-side orientation detection device 30d may also serve as the upstream-side orientation detection device 30u, the downstream-side orientation detection device 30d, and the characteristic determination device 40. In addition, in the above-described Embodiments 2 to 4, a configuration in which the orientation adjustment apparatus 10 includes the upstream-side orientation detection device 30u, the characteristic determination device 40, the during-conveyance orientation detection device 30m, and the downstream-side orientation detection device 30d has been described as an example. However, the present invention is not limited to such a configuration, and for example, the during-conveyance orientation detection device 30m may also serve as the upstream-side orientation detection device 30u, the during-conveyance orientation detection device 30m, the downstream-side orientation detection device 30d, and the characteristic determination device 40.

(8) **In** addition, the configuration disclosed in the embodiments described above is able to be applied in combination with configurations disclosed in other embodiments as long as there is no contradiction. The embodiments disclosed in the present specification are merely exemplary in all respects with regard to other configurations. Therefore, various modifications are able to be made as appropriate without departing from the scope of the present disclosure.

[Summary of Embodiments]

Hereinafter, the orientation adjustment apparatus described above will be described.

An orientation adjustment apparatus according to the present disclosure is an orientation adjustment apparatus that adjusts an orientation of a conveyance target, the orientation adjustment apparatus including: an orientation adjustment conveyor configured to adjust the orientation of the conveyance target while conveying the conveyance target along a prescribed conveyance direction, in which the orientation adjustment conveyor includes a first conveyor part and a second conveyor part that are disposed in parallel to be adjacent to each other in a conveyance width direction and is configured to cause the first conveyor part and the second conveyor part to have respective conveyance speeds different from each other, the conveyance width direction being a direction orthogonal to the conveyance direction, the first conveyor section is disposed on a first conveyance width direction side relative to the second conveyor section in the conveyance width direction, the first conveyance width direction side being opposite to a second conveyance width direction side, the first conveyor section and the second conveyor section each have a first end portion as a first one of an upstream end portion and a downstream end portion and a second end portion as a second one of the upstream end portion and the downstream end portion, the first conveyor part has a conveyance surface that is inclined in the conveyance width direction to a lower side in a vertical direction on the second conveyance width direction side at a first end portion and that has an inclination angle with respect to a horizontal plane in the conveyance width direction which inclination angle gradually decreases toward the second end portion, and the second conveyor part has a conveyance surface that is inclined in the conveyance width direction to the lower side in the vertical direction on the first conveyance width direction side at a first end portion and that has an inclination angle with respect to the horizontal plane in the conveyance width direction which inclination angle gradually decreases toward the second end portion.

According to the present configuration, in a case where a bottom surface of the conveyance target is bent to protrude to the lower side in the vertical direction, a large area of contact between the bottom surface of the conveyance target and a conveyance surface of the orientation adjustment conveyor is able to be more easily ensured when the conveyance surface of the orientation adjustment conveyor is inclined to be on the lower side in the vertical direction in the vicinity of a boundary between the first conveyor part and the second conveyor part. Meanwhile, in a case where the bottom surface of the conveyance target is planar or almost planar, a large area of contact between the bottom surface of the conveyance target and the conveyance surface of the orientation adjustment conveyor is able to be more easily ensured when the conveyance surface of the orientation adjustment conveyor is also planar. According to the present configuration, it is possible to appropriately perform orientation adjustment of a conveyance target of which a bottom surface is bent to protrude toward the lower side at a section on a first end portion side and it is possible to appropriately perform orientation adjustment of a conveyance target of which a bottom surface is planar or almost planar at a section on a second end portion side. Therefore, it is possible to appropriately perform orientation adjustment of conveyance targets having various bottom surface shapes.

According to an aspect, it is preferable that the first conveyor part is a roller conveyor including a plurality of first rollers arranged in the conveyance direction, and each having a first specific area as a partial area in the conveyance width direction and a first outer area on the first conveyance width direction side relative to the first specific area, the first specific area having a surface made of a material with a friction coefficient higher than a friction coefficient of a material of a surface of the first outer area, the second conveyor part is a roller conveyor including a plurality of second rollers arranged in the conveyance direction, and each having a second specific area as a partial area in the conveyance width direction and a second outer area on the second conveyance width direction side relative to the second specific area, the second specific area having a surface made of a material with a friction coefficient higher than a friction coefficient of a material of a surface of the second outer area, the first conveyor part includes a first driving belt configured to drive the plurality of first rollers, the first driving belt is in contact with lower surfaces of the first outer areas of the plurality of first rollers and is configured to transmit a drive force, the second conveyor part includes a second driving belt configured to drive the plurality of second rollers, and the second driving belt is in contact with lower surfaces of the second outer areas of the plurality of second rollers and is configured to transmit a drive force.

According to the present configuration, the orientation of the conveyance target brought close to the vicinity of the boundary between the first conveyor part and the second conveyor part, for example, the vicinity of a central portion of the orientation adjustment conveyor in the conveyance width direction is able to be effectively changed. In addition, according to the present configuration, it is easy to prevent an increase in degree of wear of a driving belt and a roller although the increase in degree of wear of the driving belt and the roller is likely to occur in a case where the friction coefficient of a portion that comes into contact with the driving belt is high.

According to an aspect, it is preferable that the first conveyor part is a roller conveyor including a plurality of first rollers arranged in the conveyance direction, each of the first rollers has a rotation axis inclined to a downstream side in the conveyance direction on the first conveyance width direction side, the second conveyor part is a roller conveyor including a plurality of second rollers arranged in the conveyance direction, and each of the second rollers has a rotation axis inclined to the downstream side in the conveyance direction on the second conveyance width direction side.

According to the present configuration, the conveyance target is able to be gradually moved to a vicinity of a boundary between the first conveyor part and the second conveyor part, for example, the vicinity of the central portion of the orientation adjustment conveyor in the conveyance width direction while the conveyance target is being conveyed by the orientation adjustment conveyor. Accordingly, the position of the conveyance target in the conveyance width direction is also able to be adjusted while the conveyance target is being conveyed by the orientation adjustment conveyor.

According to an aspect, it is preferable that the orientation adjustment conveyor further includes a third conveyor part that is disposed on a downstream side with respect to the first conveyor part and a fourth conveyor part that is disposed on the downstream side with respect to the second conveyor part and that is disposed on the second conveyance width direction side with respect to the third conveyor part and is configured to cause the third conveyor part and the fourth conveyor part to have respective conveyance speeds made different from each other, the third conveyor section and the fourth conveyor section each have a third end portion as a first one of an upstream end portion and a downstream end portion and a fourth end portion as a second one of the upstream end portion and the downstream end portion, the third conveyor part has a conveyance surface that is inclined in the conveyance width direction to the lower side in the vertical direction on the second conveyance width direction side at a third end portion and that has an inclination angle with respect to the horizontal plane in the conveyance width direction which inclination angle gradually decreases toward the fourth end portion, and the fourth conveyor part has a conveyance surface that is inclined in the conveyance width direction to the lower side in the vertical direction on the first conveyance width direction side at a third end portion and that has an inclination angle with respect to the horizontal plane in the conveyance width direction which inclination angle gradually decreases toward the fourth end portion.

According to the present configuration, the orientation of the conveyance target is able to be changed at the third conveyor part and the fourth conveyor part in addition to the first conveyor part and the second conveyor part. Accordingly, orientation adjustment of the conveyance target is able to be more effectively performed.

According to an aspect, it is preferable that the first end portion is the downstream end portion of each of the first conveyor part and the second conveyor part, the second end portion is the upstream end portion of each of the first conveyor part and the second conveyor part, the third end portion is the upstream end portion of each of the third conveyor part and the fourth conveyor part, and the fourth end portion is the downstream end portion of each of the third conveyor part and the fourth conveyor part.

According to the present configuration, the degree of inclination of width directions of the first conveyor part and the second conveyor part is small at the upstream-side end portions and is large at the downstream-side end portions. Next, a change is able to be made such that the degree of inclination of width directions of the third conveyor part and the fourth conveyor part is large at the upstream-side end portions and is small at the downstream-side end portions. Therefore, effective orientation adjustment is able to be performed and the conveyance target is able to be smoothly conveyed at a connection portion with respect to a conveyor that is connected to the first conveyor part and the second conveyor part on the upstream side and a conveyor that is connected to the third conveyor part and the fourth conveyor part on the downstream side in a case where the conveyors include horizontal conveyance surfaces.

According to an aspect, it is preferable that the first end portion is the upstream end portion of each of the first conveyor part and the second conveyor part, and the second end portion is the downstream end portion of each of the first conveyor part and the second conveyor part.

According to the present configuration, the conveyance surfaces become more horizontal on the downstream side of the first conveyor part and the second conveyor part and thus the conveyance target is able to be smoothly conveyed at a connection portion with respect to a conveyor that is connected to the first conveyor part and the second conveyor part on the downstream side in a case where the conveyor has a horizontal conveyance surface. Accordingly, it is easy to stably convey the conveyance target in the conveyance direction.

Industrial Applicability

The technology according to the present disclosure is able to be used for a conveyor type conveyance device including an orientation adjustment apparatus.

Description of Reference Numerals

    10: orientation adjustment apparatus
    11: conveyance target
    20: orientation adjustment conveyor
    21: first conveyor part
    21a: conveyance surface
    22: second conveyor part
    22a: conveyance surface
    23: first roller
    23a: first specific region
    23b: first outer region
    24: second roller
    24a: second specific region
    24b: second outer region
    27: first driving belt
    28: second driving belt
    71: first end portion
    72: second end portion
    73: third end portion
    74: fourth end portion
    121: third conveyor part
    121a: conveyance surface
    122: fourth conveyor part
    122a: conveyance surface
    123: third roller
    123a: third specific region
    123b: third outer region
    124: fourth roller
    124a: fourth specific region
    124b: fourth outer region
    127: third driving belt
    128: fourth driving belt
    S: orientation
    V1: conveyance speed of first conveyor part
    V2: conveyance speed of second conveyor part
    V3: conveyance speed of third conveyor part

V4: conveyance speed of fourth conveyor part

φ1: inclination angle

φ2: inclination angle

φ3: inclination angle

φ4: inclination angle

**Claims**

1. An orientation adjustment apparatus that adjusts an orientation of a conveyance target, the orientation adjustment apparatus comprising:

   an orientation adjustment conveyor configured to adjust the orientation of the conveyance target while conveying the conveyance target along a prescribed conveyance direction,

   wherein the orientation adjustment conveyor includes a first conveyor part and a second conveyor part that are disposed in parallel to be adjacent to each other in a conveyance width direction and is configured to cause the first conveyor part and the second conveyor part to have respective conveyance speeds different from each other, the conveyance width direction being a direction orthogonal to the conveyance direction,

   the first conveyor section is disposed on a first conveyance width direction side relative to the second conveyor section in the conveyance width direction, the first conveyance width direction side being opposite to a second conveyance width direction side,

   the first conveyor section and the second conveyor section each have a first end portion as a first one of an upstream end portion and a downstream end portion and a second end portion as a second one of the upstream end portion and the downstream end portion,

   the first conveyor part has a conveyance surface that is inclined in the conveyance width direction to a lower side in a vertical direction on the second conveyance width direction side at a first end portion and that has an inclination angle with respect to a horizontal plane in the conveyance width direction which inclination angle gradually decreases toward the second end portion, and

   the second conveyor part has a conveyance surface that is inclined in the conveyance width direction to the lower side in the vertical direction on the first conveyance width direction side at a first end portion and that has an inclination angle with respect to the horizontal plane in the conveyance width direction which inclination angle gradually decreases toward the second end portion.

2. The orientation adjustment apparatus according to claim 1,

   wherein the first conveyor part is a roller conveyor including a plurality of first rollers arranged in the conveyance direction and each having a first specific area as a partial area in the conveyance width direction and a first outer area on the first conveyance width direction side relative to the first specific area, the first specific area having a surface made of a material with a friction coefficient higher than a friction coefficient of a material of a surface of the first outer area,

   the second conveyor part is a roller conveyor including a plurality of second rollers arranged in the conveyance direction and each having a second specific area as a partial area in the conveyance width direction and a second outer area on the second conveyance width direction side relative to the second specific area, the second specific area having a surface made of a material with a friction coefficient higher than a friction coefficient of a material of a surface of the second outer area,

   the first conveyor part includes a first driving belt configured to drive the plurality of first rollers,

   the first driving belt is in contact with lower surfaces of the first outer areas of the plurality of first rollers and is configured to transmit a drive force,

   the second conveyor part includes a second driving belt configured to drive the plurality of second rollers, and

   the second driving belt is in contact with lower surfaces of the second outer areas of the plurality of second rollers and is configured to transmit a drive force.

3. The orientation adjustment apparatus according to claim 1 or 2,

   wherein the first conveyor part is a roller conveyor including a plurality of first rollers arranged in the conveyance direction,

   each of the first rollers has a rotation axis inclined to a downstream side in the conveyance direction on the first conveyance width direction side,

the second conveyor part is a roller conveyor including a plurality of second rollers arranged in the conveyance direction, and

each of the second rollers has a rotation axis inclined downstream in the conveyance direction on the second conveyance width direction side.

4. The orientation adjustment apparatus according to claim 1 or 2,

wherein the orientation adjustment conveyor further includes a third conveyor part that is disposed on a downstream side with respect to the first conveyor part and a fourth conveyor part that is disposed on the downstream side with respect to the second conveyor part and that is disposed on the second conveyance width direction side with respect to the third conveyor part and is configured to cause the third conveyor part and the fourth conveyor part to have respective conveyance speeds different from each other,

the third conveyor section and the fourth conveyor section each have a third end portion as a first one of an upstream end portion and a downstream end portion and a fourth end portion as a second one of the upstream end portion and the downstream end portion,

the third conveyor part has a conveyance surface that is inclined in the conveyance width direction to the lower side in the vertical direction on the second conveyance width direction side at a third end portion and that has an inclination angle with respect to the horizontal plane in the conveyance width direction which inclination angle gradually decreases toward the fourth end portion, and

the fourth conveyor part has a conveyance surface that is inclined in the conveyance width direction to the lower side in the vertical direction on the first conveyance width direction side at a third end portion and that has an inclination angle with respect to the horizontal plane in the conveyance width direction which inclination angle gradually decreases toward the fourth end portion.

5. The orientation adjustment apparatus according to claim 4,

wherein the first end portion is the downstream end portion of each of the first conveyor part and the second conveyor part,

the second end portion is the upstream end portion of each of the first conveyor part and the second conveyor part,

the third end portion is the upstream end portion of each of the third conveyor part and the fourth conveyor part, and

the fourth end portion is the downstream end portion of each of the third conveyor part and the fourth conveyor part.

6. The orientation adjustment apparatus according to claim 1 or 2,

wherein the first end portion is the upstream end portion of each of the first conveyor part and the second conveyor part, and

the second end portion is the downstream end portion of each of the first conveyor part and the second conveyor part.

# Fig.1

EP 4 592 222 A1

Fig.2

# Fig.3

# Fig.4

# Fig.5

Fig.6

EP 4 592 222 A1

## Fig.7

EP 4 592 222 A1

Fig.8

EP 4 592 222 A1

Fig.9

## Fig.10

## Fig.11

## Fig.12

# Fig.13

EP 4 592 222 A1

Fig.14

## INTERNATIONAL SEARCH REPORT

| International application No. |
|---|
| **PCT/JP2023/033569** |

| A. | CLASSIFICATION OF SUBJECT MATTER |
|---|---|

*B65G 47/31*(2006.01)i
FI:  B65G47/31 B

According to International Patent Classification (IPC) or to both national classification and IPC

| B. | FIELDS SEARCHED |
|---|---|

Minimum documentation searched (classification system followed by classification symbols)

B65G47/31

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | JP 2004-26444 A (ISHII IND CO., LTD.) 29 January 2004 (2004-01-29) | 1, 3, 6 |
|   | paragraphs [0012]-[0024], fig. 1-4 | |
| A | paragraphs [0012]-[0024], fig. 1-4 | 2, 4-5 |
| Y | JP 2014-511808 A (LAITRAM, LLC) 19 May 2014 (2014-05-19) | 1, 3, 6 |
|   | paragraphs [0009]-[0012], fig. 1-3 | |
| A | paragraphs [0009]-[0012], fig. 1-3 | 2, 4-5 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **22 November 2023** | **05 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/033569**

| Patent document cited in search report | Publication date (day/month/year) | Patent family member(s) | Publication date (day/month/year) |
|---|---|---|---|
| JP 2004-26444 A | 29 January 2004 | (Family: none) | |
| JP 2014-511808 A | 19 May 2014 | CN 103443000 A | |
| | | KR 10-2014-0022050 A | |

**EP 4 592 222 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010100398 A